# EUROPEAN PATENT APPLICATION

(11) **EP 1 312 544 A2**
(43) Date of publication of application: **21.05.2003**
(21) Application number: 02025729.1
(22) Date of filing: 15.11.2002
(51) Int. Cl.: B62M 21/00

(54) **Scooter type motorcycle**

(30) Priority: 20.11.2001 JP 2001354541
(71) Applicant: YAMAHA HATSUDOKI KABUSHIKI KAISHA, Iwata-shi Shizuoka-ken (JP)
(72) Inventor: Nomura, Yasushi, Iwata-Shi, Shizuoka-ken (JP)
(74) Representative: Grünecker, Kinkeldey, Stockmair & Schwanhäusser Anwaltssozietät

(57) **Abstract**

The present invention relates to a scooter type motorcycle. It aims to provide improved riding comfort and fluctuating torque transmission conditions.

Said target is performed by such a motorcycle having a swing type engine unit driving a drive shaft which extends in a width direction of the vehicle, wherein a wheel damper is integrated within the width extension of the rear wheel of the vehicle.

## Description

The present invention relates to a scooter type motorcycle having a unit swing type engine driving a rear wheel via a drive shaft extending in a vehicle width direction.

A unit swing type engine mounted to a scooter type motorcycle is constituted by integrating the engine and a transmission mechanism of an automatic transmission, a speed reduction gear or the like and supported by a rear portion of a vehicle body pivotably in an up and down direction and a drive shaft (output shaft)extended from the rear portion in a vehicle width direction is directly coupled with a rear wheel by a serration coupling.

Therefore, rotation of the engine is transmitted to the drive shaft via the transmission mechanism of the automatic transmission or the speed reduction gear and is transmitted from the drive shaft directly to the rear wheel.

However, when rotation of the engine is transmitted from the drive shaft directly to the rear wheel as described above, a variation in torque of the engine is transmitted to the rear wheel as it is and there poses a problem that a ride comfort characteristic of the motorcycle is hampered.

Meanwhile, although in other motorcycle using a chain in the transmission mechanism, the ride comfort characteristic is promoted by absorbing the variation in the torque of the engine by a wheel damper, it is spatially difficult to integrate the wheel damper to the scooter type motorcycle.

Accordingly, it is an objective of the invention to provide a scooter type motorcycle having improved ride comfort characteristics, in particular under consideration of fluctuating torque transmission.

This objective is solved in an inventive manner by a scooter type motorcycle having a unit swing type engine driving a rear wheel via a drive shaft extending in a vehicle width direction, wherein the wheel damper is integrated within the width of the rear wheel.

In that the wheel damper is arranged within the width of the rear wheel, any spatial difficulty can be avoided and the ride comfort can be distinctively improved.

Preferably, a scooter type motorcycle constituted by supporting a rear wheel by a drive shaft extended from a unit swing type engine in a vehicle width direction has a wheel portion structure comprising:
a clutch member including a boss portion fitted to an outer periphery of the drive shaft, a flange portion formed at the boss portion and a plurality of clutch hubs erected radially from the flange portion to the boss portion;
wherein the rear wheel comprises a power transmitting portion in a recessed shape fitted with the clutch hub for the clutch member via an elastic member and a boss portion fitted to an outer periphery of the boss portion of the clutch member; and
wherein the boss portion of the clutch member and the boss portion of the rear wheel are fitted to each other at the same position as a position of the power transmitting portion of the rear wheel in a width direction.

According to a preferred embodiment, a rib for a wheel damper is formed at a vicinity of a vehicle body center of the rear wheel and a parking brake is arranged at a vicinity of the rib for the wheel damper of the rear wheel.

Therefore, the boss portion of the clutch member and the boss portion of the rear wheel are fitted to each other at the same position as the position of the power transmission portion of the rear wheel in the width direction and therefore, the wheel damper preferably constituted by the clutch member, the power transmitting portion of the rear wheel, the elastic member and the like is integrated within the width of the rear wheel, rational arrangement of the wheel damper can be carried out without being accompanied by spatial difficulty and the torque variation of the engine is absorbed by the wheel damper to thereby promote the ride comfort characteristic of the scooter type motorcycle.

Accordingly, even when the wheel damper and the parking brake are arranged to the wheel to be contiguous to each other, the wheel is reinforced by the rib for the wheel damper formed at the vicinity of the vehicle body center of the wheel and therefore, necessary sufficient strength can be ensured for the wheel.

Further preferred embodiments of the invention are subject to the subclaims.

In the following, an explanation will be given of embodiments of the invention in reference to the attached drawings as follows, wherein:
- Fig. 1: is a side view of a scooter type motorcycle 1 having a wheel portion structure according to the invention;
- Fig. 2: is a sectional view of an essential portion of a rear wheel portion showing the rear wheel structure according to the embodiment 1 of the invention;
- Fig. 3: is a sectional view taken along a line A-A of Fig. 2;
- Fig. 4: is a sectional view of an essential portion of a rear wheel portion showing a rear wheel portion structure according to embodiment 2 of the invention; and
- Fig. 5: is a sectional view taken along a line B-B of Fig. 4.

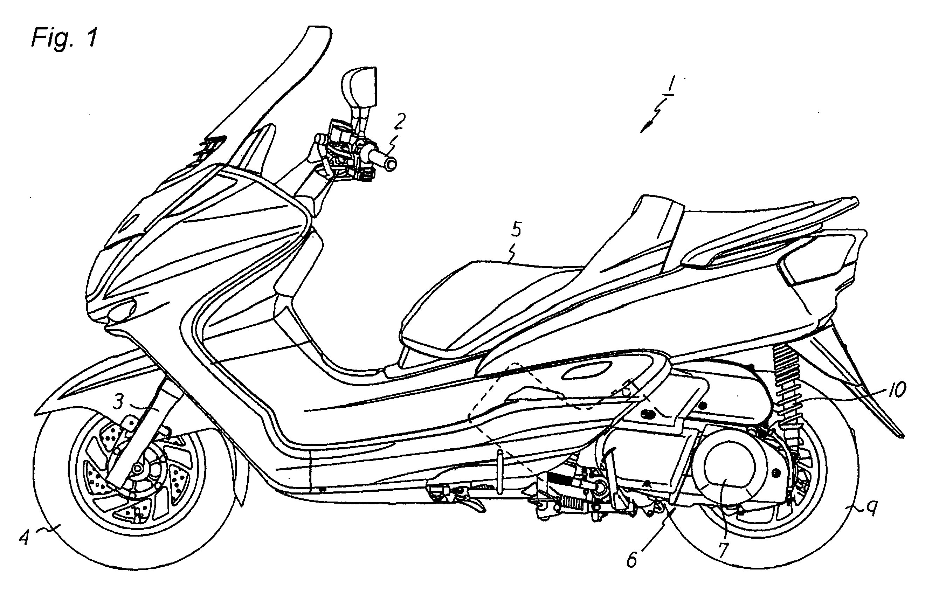

Fig. 1 is a side view of a scooter type motorcycle 1 having a wheel portion structure, a steering shaft, not illustrated, is pivotably inserted into and supported by a head pipe, not illustrated, disposed at a front upper portion of a vehicle body of the illustrated scooter type motorcycle 1 and a handle 2 is attached to an upper end of the steering shaft. Further, a front fork 3 is attached to a lower end of the steering shaft and a front wheel 4 is axially supported rotatably by a lower end portion of the front fork 3.

Further, a seat 5 is arranged on a rear lower side of the handle 2 and at a rear portion of the vehicle body on the lower side, a unit swing type engine 6 is arranged by axially supporting a front end portion thereof pivotably in an up and down direction by a pivoting shaft, not illustrated.

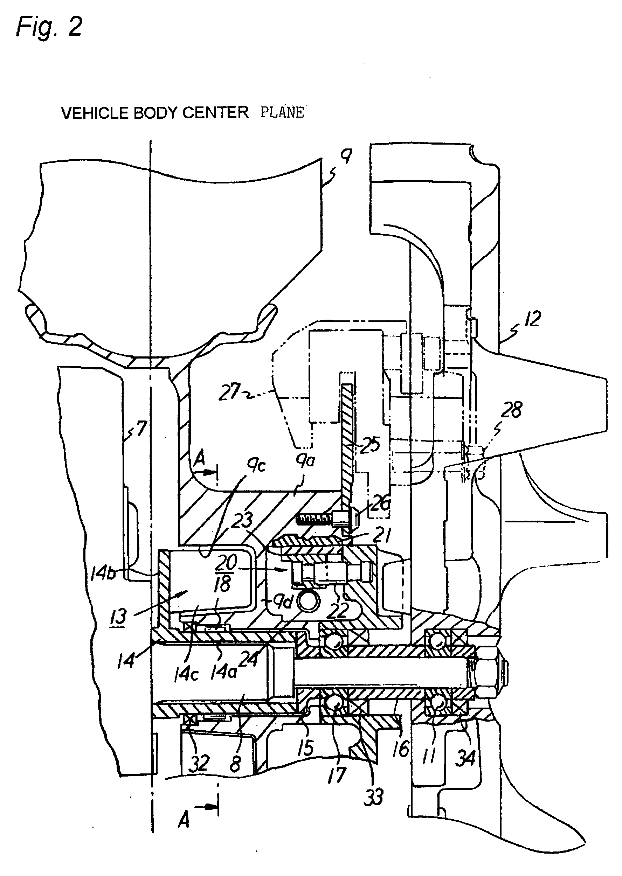

According to the unit swing type engine 6 the engine as a drive source and a transmission mechanism of a V-belt type automatic transmission, a speed reduction gear or the like are integrally assembled to a transmission case 7 and a rear wheel 9 is supported by a drive shaft (output shaft) 8 (refer to Fig. 2) extended from the rear portion in an inner side direction. Further, the rear wheel 9 and the rear portion of the unit swing engine 6 supporting the rear wheel 9 are suspended by the vehicle body side via a rear cushion 10.

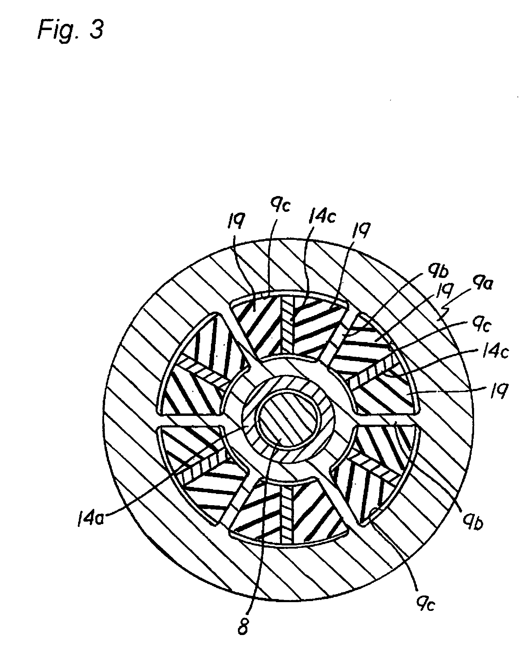

Next, an explanation will be given of the invention in reference to the Fig. 2 and Fig. 3. Further, Fig. 2 is a sectional view of an essential portion of the rear wheel portion and Fig. 3 is a sectional view taken along a line A-A of Fig. 2.

As shown by Fig. 2, an extended end of the drive shaft 8 extended from a rear portion of the transmission case 7 of the unit swing type engine 6 in a side direction, is supported by a rear arm 12 rotatably via a ball bearing 11. Further, the rear arm 12 is axially supported by a pivoting shaft, not illustrated, at a front end thereof and is pivoted in the up and down direction centering on a common pivoting shaft along with the unit swing type engine 6.

Further, according to a first embodiment, there is adopted a constitution of transmitting rotation of the drive shaft 8 to the rear wheel 9 via a wheel damper 13. That is, in a clutch member 14 constituting the wheel damper 13, a cylindrical boss 14a provided at a center portion thereof is coupled to an outer periphery of the drive shaft 8 by serration coupling and the clutch member 14 is positioned on the drive shaft 8 by collars 15 and 16 and a ball bearing 17. In Fig. 2, numerals 32, 33 and 34 designate oil seals.

Further, a flange 14b of the clutch member 14 is projected with a plurality (6 sheets according to the embodiment) of clutch hubs 14c radially at equal angular pitches toward the rear wheel 9 (refer to Fig. 3).

Here, as shown by Fig. 2, the rear wheel 9 is rotatably arranged on an outer peripheral side of the boss 14a of the clutch member 14 and is rotatably supported by the boss 14a of the clutch member 14 and the drive shaft 8 via a needle bearing 18 and the ball bearing 17.

Meanwhile, as shown by Fig. 3, a plurality (6 according to the embodiment) of ribs 9b for the wheel damper are radially formed at a left end face of a hub 9a of the rear wheel 9 and at a vicinity of a vehicle body center line (refer to Fig. 2) and a plurality of recessed portions 9c partitioned by the ribs 9b are formed at the left end face of the hub 9a. Further, the clutch hubs 14c of the clutch member 14 face the respective recessed portions 9c, a damper 19 made of rubber is interposed between the clutch hub 14c and the rib 9b for the wheel damper at inside of the recessed portion 9c and the wheel damper 13 is constituted by the damper 19, the rib 9b for the wheel damper and the clutch member 14.

Further, as shown by Fig. 2, at a portion of the hub 9a of the rear wheel 9 contiguous to the rib 14c for the wheel damper, a parking brake 20 is integrated with a vertical wall 9d as a boundary on the right side of the vertical wall 9d. In this case, the parking brake 20 is a drum brake and the drum brake is constituted by including a brake liner 21 expanded at an inner periphery of the hub 9a of the rear wheel 9, two brake shoes 23 in a semicircular shape arranged on an inner side of the brake liner 21 and pivoted by centering on an anchor pin 22, two return springs 24 for urging the brake shoes 23 in a diameter contracting direction (direction of not operating brake) and a cam, not illustrated, pivoted by parking operation to thereby push to open the brake shoes 23.

Further, in parking the scooter type motorcycle 1, when a rider operates a parking lever, not illustrated, the cam, not illustrated, of the parking brake 20 is pivoted to thereby push to open the two brake shoes 23 against urge force of the return springs 24 to thereby press the brake shoes 23 to an inner peripheral face of the brake liner 21 and therefore, friction force is produced therebetween and rotation of the rear wheel 9 is locked by the friction force.

Further, at a right end face of the hub 9a of the rear wheel 9, a brake disk 25 in a ring-like shape constituting a hydraulic type disk brake is attached by a plurality (a single piece one is also illustrated in Fig. 2) of bolts 26 and the rear arm 12 is attached with a caliper 27 for producing necessary brake force by pinching the break disk 25 by hydraulic pressure from both sides thereof by a bolt 28.

According to the scooter type motorcycle 1 having the above-described constitution, when the unit swing type engine 6 is started and the engine, not illustrated, is driven to rotate, the rotation is transmitted to the drive shaft 8 via a transmission mechanism of a V-belt type automatic transmission, a speed reduction gear or the like, not illustrated, and the drive shaft 8 is driven to rotate. Further, the rotation of the drive shaft 8 is transmitted to the rear wheel 9 via the wheel damper 13.

That is, the rotation of the drive shaft 8 is transmitted to the rear wheel 9 via the clutch hub 14c of the clutch member 14 coupled to the drive shaft 8 by serration coupling, the damper 19 and the rib 9b for the wheel damper and the rear wheel 9 is driven to rotate at predetermined speed to thereby run the scooter type motorcycle 1, the variation in the torque of the engine is absorbed by elastic deformation of the damper 19 made of rubber of the wheel damper 13 to thereby cut transmission of the variation to the rear wheel 9 and therefore, the ride comfort characteristic of the scooter type motorcycle 1 is promoted.

Further, when the rider operates the brake in running the scooter type motorcycle 1, hydraulic pressure is transmitted from a master cylinder, not illustrated, to the caliper 27 of the disk brake, both faces of the brake disk 25 are pinched by the caliper 27 to thereby produce necessary brake force and therefore, the scooter type motorcycle 1 is decelerated or stopped by the brake force.

As described above, according to the embodiment, the rear wheel 9 is rotatably arranged on the outer peripheral side of the boss 14a of the clutch member 14 constituting the wheel damper 13 and therefore, the wheel damper 13 is integrated within the width of the rear wheel 9, rational arrangement of the wheel damper 13 can be carried out without being accompanied by spatial difficulty, the torque variation of the engine is absorbed by the wheel damper 13 and the ride comfort characteristic of the scooter type motorcycle is promoted.

Further, according to the embodiment, even when the wheel damper 13 and the working brake 20 are arranged at the rear wheel 9 to be contiguous to each other, since the rear wheel 9 is reinforced by the rib 9b for the wheel damper formed at a vicinity of the vehicle body center of the rear wheel 9, necessary sufficient strength can be ensured for the rear wheel 9.

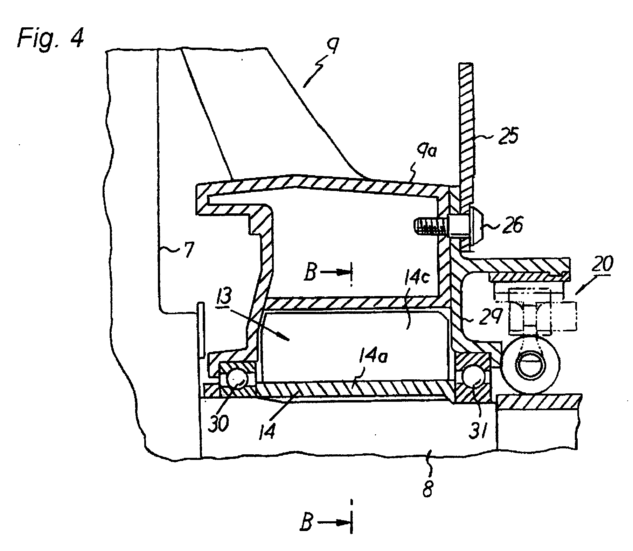

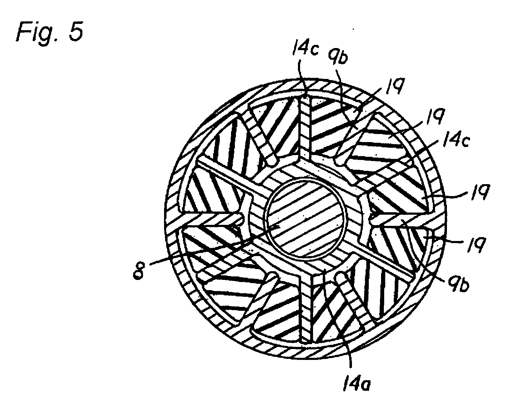

Next, an explanation will be given of a second embodiment of the invention in reference to Fig. 4 and Fig. 5. Further, Fig. 4 is a sectional view of an essential portion of a rear wheel portion, Fig. 5 is a sectional view taken along a line B-B of Fig. 4, in these drawings, the same elements as those shown in Fig. 2 and Fig. 3 are attached with the same notations and in the following, an explanation thereof will be omitted.

According to the embodiment, a plurality (6 according to the embodiment) of the ribs 9b for the wheel damper are radially formed (refer to Fig. 5) at the inner peripheral portion of the hub 9a of the rear wheel 9, the wheel damper 13 is integrated to a central portion of the hub 9a and a lid member 29 is attached to an end face of the hub 9a by the bolt 26 along with the brake disk 25 to thereby cover the wheel damper 13.

Here, the wheel damper 13 is constituted by arranging the clutch hub 14c erected radially at the outer periphery of the boss 14a of the clutch member 14 coupled to the outer periphery of the drive shaft 8 by serration coupling between the ribs 9b for the wheel damper on the side of the rear wheel 9 and interposing the damper 19 made of rubber between the clutch hub 14c and the rib 9b for the wheel damper.

Further, the rear wheel 9 is rotatably supported by the drive shaft 8 by ball bearings 30 and 31. Further, according to the embodiment, the parking brake 20 constituted by the drum brake is integrated to the lid member 29.

Further, also according to the embodiment, the wheel damper 13 is integrated within the width of the rear wheel 9 and therefore, rational arrangement of the wheel damper 23 can be carried out without being accompanied by spatial difficulty and the torque variation of the engine is absorbed by the wheel damper 13 to thereby promote the ride comfort characteristic of the scooter type motorcycle 1.

As is apparent from the above-described explanation, according to the invention, in a scooter type motorcycle constituted by supporting a rear wheel by a drive shaft extended from a unit swing type engine in a vehicle width direction, the wheel portion structure comprising:
a clutch member including a boss portion fitted to an outer periphery of the drive shaft, a flange portion formed at the boss portion and a plurality of clutch hubs erected radially from the flange portion to the boss portion;
wherein the rear wheel comprises a power transmitting portion in a recessed shape fitted with the clutch hub for the clutch member via an elastic member and a boss portion fitted to an outer periphery of the boss portion of the clutch member; and
wherein the boss portion of the clutch member and the boss portion of the rear wheel are fitted to each other at a position the same as a position of the power transmitting portion of the rear wheel in a width direction and therefore, there is achieved the effect being capable of promoting the ride comfort characteristic by integrating the wheel damper without being accompanied by spatial difficulty.

In other words, to provide a wheel portion structure of a motorcycle capable of promoting a ride comfort characteristic by integrating a wheel damper without being accompanied by spatial difficulty, it is proposed, according to the invention, in a scooter type motorcycle constituted by supporting rear wheel 9 by a drive shaft 8 extended from a unit swing type engine in a vehicle width direction, the wheel portion structure including a clutch member 14 having a boss portion 14a fitted to an outer periphery of the drive shaft 8, a flange portion 14b formed at the boss portion 14a and a plurality of clutch hubs 14c erected radially from the flange portion 14b to the boss portion 14a in which the rear wheel 9 is provided with a recessed portion 9c fitted with the clutch hub 14c via a damper (elastic member) 19 and a boss portion fitted with an outer periphery of the boss portion 14a of the clutch member 14 and the boss portion 14a of the clutch member 14 and the boss portion of the rear wheel 9 are fitted to each other at the same position as that of the recessed portion 9c of the rear wheel 9 in the width direction.

The present invention relates to a scooter type motorcycle. It aims to provide improved riding comfort and fluctuating torque transmission conditions.

Said target is performed by such a motorcycle having swing type engine unit driving a drive shaft which extends in a width direction of the vehicle, wherein a wheel damper is integrated within the width extension of the rear wheel of the vehicle.

The present invention relates to a scooter type motorcycle. It aims to provide improved riding comfort and fluctuating torque transmission conditions.

Said target is performed by such a motorcycle having a swing type engine unit driving a drive shaft which extends in a width direction of the vehicle, wherein a wheel damper is integrated within the width extension of the rear wheel of the vehicle.

## Claims

1. Scooter type motorcycle having a unit swing type engine (6) driving a rear wheel (9) via a drive shaft (8) extending in a vehicle width direction,
**characterized in that**
the wheel damper (13) is integrated within the width of the rear wheel (9).

2. Scooter type motorcycle according to claim 1, **characterized in that** said wheel damper (13) comprises a clutch member (14) having a number of clutch hubs (14c) and being coupled to an outer periphery of the drive shaft (8),
a hub portion (9a) of said rear wheel (9) having a corresponding number of wheel ribs (9b) and being arranged rotatably about said drive shaft (8),
and damper members (19) being interposed between said clutch hubs (14c) and said wheel ribs (9b) in a circumferential direction of the drive shaft (8).

3. Scooter type motorcycle according to claim 2, **characterized in that** said clutch member (14) comprises a boss portion (14a) being fitted to said outer periphery of the drive shaft (8), a flange portion (14b) formed at said boss portion (14a) and extending in a radial direction of the drive shaft (8), wherein said number of clutch hubs (14c) extend from said flange portion (14) in an axial direction of said drive shaft (8).

4. Scooter type motorcycle according to claim 3, **characterized in that** said flange portion (14b) is formed close to a side end of the boss portion (14a) of the clutch member (14) at a vicinity of a vehicle body center plane of the scooter type motorcycle (1).

5. Scooter type motorcycle according to claim 4, **characterized in that** said number of clutch hubs (14c) extend in a direction away from said body center plane towards the boss portion (14a) of the clutch member (14).

6. Scooter type motorcycle according to at least one of the claims 2 to 5, **characterized in that** said hub (9a) and said number of ribs (9b) are radially formed at one end face of said hub (9a) of the rear wheel (9) and at the vicinity of a body vehicle center plane, and wherein a number of recessed portions (9c) partitioned by the ribs (9b) are formed at the one end face of the hub (9a).

7. Scooter type motorcycle according to claim 6, **characterized in that** a vertical wall (9d) extends radially inwardly from said hub (9a) of said rear wheel (9) contiguous to the ribs (14b) of the clutch member (14).

8. Scooter type motorcycle according to claim 2, **characterized in that** said clutch member (14) comprises a boss portion (14a) being fitted to said outer periphery of the drive shaft (8), wherein said number of clutch hubs (14c) extend from said boss portion (14a) in radial directions outwardly.

9. Scooter type vehicle according to claim 1 or 8, **characterized in that** said number of ribs (9b) are formed at an inner peripheral portion of a hub (9a) of the rear wheel (9) and extend radially inwardly towards a boss portion (14a) of the clutch member (14).

10. Scooter type vehicle according to at least one of the claims 2 to 9, **characterized in that** said ribs (9b) of said rear wheel (9) for said wheel damper (13) are formed at a vicinity of a vehicle body center plane of the rear wheel (9) and **in that** a parking brake (20) is arranged at a vicinity of the ribs (9b) for the wheel damper (13) of the rear wheel (9).
